# EUROPÄISCHE PATENTSCHRIFT

(11) **EP 1 517 947 B1**
(45) Veröffentlichungstag und Bekanntmachung des Hinweises auf die Patenterteilung: **22.03.2006**
(21) Anmeldenummer: 03735567.4
(22) Anmeldetag: 06.06.2003
(51) Int. Cl.: C08J 9/16, B29C 44/34

(54) **VERFAHREN ZUR HERSTELLUNG VON EXPANDIERBAREM POLYSTYROL**
METHOD FOR PRODUCING EXPANDABLE POLYSTYRENE
PROCEDE POUR PRODUIRE DU POLYSTYRENE POUVANT ETRE EXPANSE

(30) Priorität: 14.06.2002 DE 10226749
(43) Veröffentlichungstag der Anmeldung: 30.03.2005
(73) Patentinhaber: BASF Aktiengesellschaft, 67056 Ludwigshafen (DE)
(72) Erfinder: DIETZEN, Franz-Josef, 67454 Hassloch (DE); EHRMANN, Gerd, 67146 Deidesheim (DE); SCHMIED, Bernhard, 67227 Frankenthal (DE); LAUN, Martin, 68199 Mannheim (DE); HAHN, Klaus, 67281 Kirchheim (DE); RUCH, Joachim, 67157 Wachenheim (DE); HOLOCH, Jan, 69181 Leimen (DE); ALLMENDINGER, Markus, 73326 Deggingen (DE); DATKO, Achim, 69181 Leimen (DE)
(86) Internationale Anmeldenummer: PCT/EP2003/005952
(87) Internationale Veröffentlichungsnummer: WO 2003/106544

(56) Entgegenhaltungen:
- WO-A-00/43442
- US-A- 4 606 873
- US-A- 4 644 013
- US-A- 5 271 886
- US-B1- 6 340 713

## Beschreibung

Die Erfindung betrifft ein Verfahren zur Herstellung von expandierbaren Styrolpolymeren mit einem Molekulargewicht M_{w} von mehr als 170.000 g/mol, wobei man eine treibmittelhaltige Styrolpolymerschmelze mit einer Temperatur von mindestens 120°C durch eine Düsenplatte mit Bohrungen, deren Durchmesser am Düsenaustritt höchstens 1,5 mm beträgt, fördert und anschließend granuliert, sowie expandierbare Styrolpolymere (EPS) mit einem Molekulargewicht M_{w} von mehr als 170.000 g/mol mit 0,05 bis 1,5 Gew.-% Innenwasser.

Verfahren zur Herstellung von expandierbaren Styrolpolymeren, wie expandierbarem Polystyrol (EPS) durch Supensionspolymerisation ist seit langem bekannt. Diese Verfahren haben den Nachteil, dass große Mengen Abwasser anfallen und entsorgt werden müssen. Die Polymerisate müssen getrocknet werden um Innenwasser zu entfernen. Außerdem führt die Suspensionspolymerisation in der Regel zu breiten Perlgrößenverteilungen, die aufwändig in verschiedene Perlfraktionen gesiebt werden müssen.

Weiterhin können expandierte (z. B. US 3,817 669) und expandierbare Styrolpolymerisate durch Extrusionsverfahren (GB-A- 1 062 307) hergestellt werden und). Die EP-A 668 139 beschreibt ein Verfahren zur wirtschaftlichen Herstellung von expandierbarem Polystyrolgranulat (EPS) wobei die treibmittelhaltige Schmelze mittels statischer Mischelemente in einer Dispergier-, Halte- und Abkühlstufe hergestellt und anschließend granuliert wird. Aufgrund der Abkühlung der Schmelze auf wenige Grad über der Erstarrungstemperatur ist die Abführung hoher Wärmemengen notwendig.

Die WO 98/51735 beschreibt Graphitpartikel enthaltende expandierbare Styrolpolymere mit verringerter Wärmeleitfähigkeit, die durch Suspensionspolymerisation oder durch Extrusion in einem Zweischneckentextruder erhältlich sind. Aufgrund der hohen Scherkräfte in einem Zweischneckentextruder beobachtet man in der Regel einen signifikanten Molekulargewichtsabbau des eingesetzten Polymeren und/oder teilweise Zersetzung von zugegebenen Additiven, wie Flammschutzmittel.

Zur Erzielung optimaler Dämmeigenschaften und guter Oberflächen der Schaumstoffkörper ist die Zellzahl und Schaumstruktur, die sich beim Verschäumen der expandierbaren Styrolpolymeren (EPS) einstellt, von entscheidender Bedeutung. Die durch Extrusion hergestellten EPS-Granulaten lassen sich häufig nicht zu Schaumstoffen mit optimaler Schaumstruktur verschäumen.

Aufgabe der vorliegende Erfindung war es, den vorgenannten Nachteilen abzuhelfen und ein wirtschaftliches Verfahren zur Herstellung von expandierbaren Styrolpolymergranulaten mit kleiner Granulatgröße und einheitlicher Granulatgrößenverteilung bereitzustellen, die sich insbesondere zu Schaumstoffen mit homogener Struktur und hoher Zellzahl verschäumen lassen.

Demgemäß wurde das eingangs beschriebene Verfahren gefunden sowie expandierbare Styrolpolymere (EPS) mit einem Molekulargewicht M_{w} von mehr als 170.000 g/mol, die 0,05 bis 1,5 Gew-% Innenwasser enthalten.

Es hat sich gezeigt, dass Styrolpolmere mit Molekulargewichten Mw von unter 170.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekuargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3.5, besonders bevorzugt im Bereich von 1,5 bis 2,8 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-α-Methstyrol-copolymere, Acrylnitril-Butadien-Styrolpolymerisate (ABS), Styrol-Acrylnitril (SAN) Acrylnitril-Styrol-Acrylester (ASA), Metbyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylentherephtalat (PET) oder Polybutylenterephtalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Desweiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 30 Gew.-%, insbesondere in Mengen von 1 bis 10 Gew.-%.

Die treibmittelhaltige Styrolpolymerschmelze enthält in der Regel eine oder mehrere Treibmittel in homogener Verteilung in einem Anteil von insgesamt 2 bis 10 Gew.-%, bezogen auf die treibmittelhaltige Styrolpolyermschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierten Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatirix erfolgen. Bevorzugt erfolgt die Zugabe vor der Treibmitteldosierung. Eine homogene Verteilung des Wassers kann mittels Knetelementen oder statischen Mischern erreicht werden.

Die zugesetzte Wassermenge wird so gewählt, dass die expandierbaren Styrolpolymeren (EPS) ein Expansionsvermögen a, definiert als Schüttdichte vor dem Verschäumen/Schüttdichte nach dem Verschäumen von höchstens 125 aufweisen. In der Regel sind 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die erfindungsgemäßen expandierbaren Styrolpolymergranulate (EPS) weisen in der Regel eine Schüttdichte von höchstens 700 g/l auf.

Des weiteren können der Styrolpolymerschmelze Additive, Keimbildner, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein, ein Dispergierhilfsmittel, z.B Organosilane oder Maleinsäureanhydridgepfropfte Styrolpolymere, einzusetzen und bei niedrigen Scherraten, z. B. kleiner 30/sec über einen Seitenextruder oder über einen statischen Mischer einzumischen. Bevorzugte Weichmacher sind Mineralöle, oligomere Syrolpolymere, Phtalate in Mengen von 0,05 bis 10 Gew.-%, bezogen auf das Styrolpolymerisat.

Die höhermolekularen Styrolpolymerisate erlauben dass die treibmittelhaltige Styrolpolymerschmelze mit einer Temperatur im Bereich von 140 bis 300°C, bevorzugt im Bereich von 160 bis 240°C durch die Düsenplatte gefördert werden kann. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 0,9 mm gezielt einstellen.

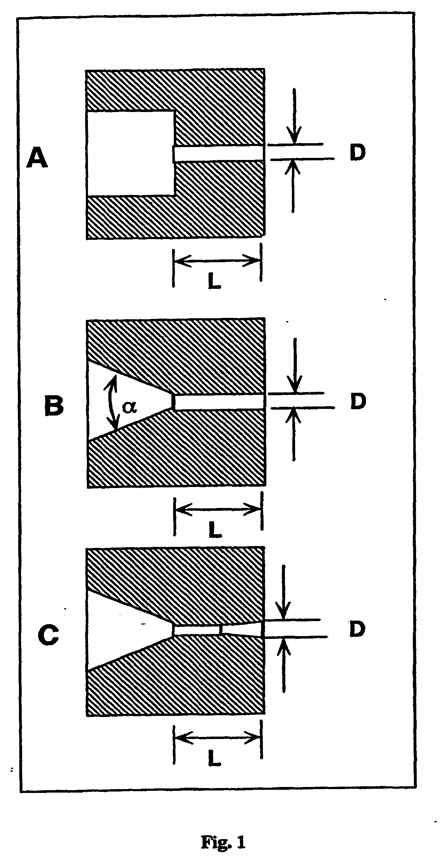

Neben der Molekulargewichtsverteilung kann die Strangaufweitung durch die Düsengeometrie beeinflusst werden. Beispiele für geeignete Düsengeometrien sind in Figur 1 gezeigt. Die Länge (L) bezeichnet den Düsenbereich, dessen Durchmesser höchstens dem Durchmesser (D) am Düsenaustritt entspricht. Die Düsenplatte weist bevorzugt Bohrungen mit einem Verhältnis L/D von mindestens 2 auf. Bevorzugt liegt das Verhältnis L/D im Bereich von 3 - 10.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren mit einem Molekulargewicht Mw von mehr als 170.000 g/mol, umfasst die Schritte
a) Polymerisation von Styrolmonomer und gegebenenfalls copolymersierbaren Monomeren,
b) Entgasungung des erhaltenen Styrolpolymerschmelze,
c) Einmischen des Treibmittels und gegebenenfalls Additiven, in die Styrolpolymerschanelze mittels statischen oder dynamischen Mischer bei einer Temperatur von mindestens 150°C,
d) Kühlen der treibmittelhaltigen Styrolpolymersehmelze auf eine Temperatur von mindestens 120°C,
e) Austrag durch eine Düsenplatte mit Bohrungen, deren Durchmesser am Düsenaustritt höchstens 1,5 mm beträgt und
f) Granulieren der treibmittelhaltigen Schmelze.

In Schritt f) kann die Granulierung direkt hinter der Düsenplatte unter Wasser bei einem Druck im Bereich von 1 bis 10 bar erfolgen.

Aufgrund der Polymerisation in Stufe a) und Entgasung in Stufe b) steht für die Treibmittelimpägnierung in Stufe c) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmomomergehalten, ist es ferner zweckmäßig, den mechanischen und thermischen Energieeintrag in allen folgenden Verfahrensstufen so gering wie möglich zu halten. Besonders bevorzugt werden daher Scherraten unter 30/sec, und Temperaturen unter 260°C sowie kurze Verweilzeiten im Bereich von 1 bis 10, bevorzugt 2 bis 5 Minuten in den Stufen c) bis e) eingehalten. Besonders bevorzugt werden ausschließlich statische Mischer im gesamten Verfahren eingesetzt. Die Polymerschmelze kann durch Druckpumpen, z. B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

### Beispiele:

Für die Beispiele wurde eine treibmittelhaltige Polystyrolschmelze aus PS 158 K der BASF Aktiengesellschaft mit einer Viskositätszahl VZ von 98 ml/g (M_{w} *=* 280.000 g/mol, Uneinheitlichkeit Mw/Mn = 3.0) und 6 Gew.-% n-Pentan eingesetzt, sofern in den Beispielen keine andere Angaben gemacht werden.

### Beispiel 1:

Die treibmittelhaltige Polystyrolschmelze (6 Gew.-% n-Pentan) wurde mit 100 kg/h Durchsatz durch eine Düsenplatte mit 300 Bohrungen (Durchmesser am Düsenaustritt (D) 0,4 mm, entsprechend Form A in Fig. 1) gefördert. Die Schmelzetemperatur betrug 160°C. Die erhaltenen expandierbaren Polystyrolgranulate besaßen einen einheitlichen Granulatdurchmesser von 1,0 mm. Der Styrolmonomerengehalt wurde zu 400 ppm bestimmt.

Durch Erhöhung der Schmelzetemperatur verringerte sich der Granulatdurchmesser.

| Schmelzetemperatur (°C) | Granulatdurchmesser (mm) |
|---|---|
| 160 | 1,0 |
| 180 | 0,8 |
| 200 | 0,65 |

### Beispiel 2:

Die treibmittelhaltige Polystyolschmelze (6 Gew.-% n-Pentan) wurde mit 100 kg/h Durchsatz durch eine Düsenplatte mit 300 Bohrungen (Durchmesser am Düsenaustritt (D) 0,4 mm, entsprechend Form A in Fig. 1) gefördert. Die Temperatur der Schmelze und der Düsenplatte betrug jeweils 200°C. Die erhaltenen expandierbaren Polystyrolgranulate besaßen einen einheitlichen Granulatdurchmesser von 0,65 mm.

| Schmelzetemperatur (°C) | Düsenplattentemperatur (°C) | Granulatdurchmesser (mm) |
|---|---|---|
| 200 | 180 | 0,80 |
| 200 | 200 | 0,65 |
| 200 | 220 | 0,60 |
| 200 | 240 | 0,55 |

### Beispiel 3:

Die treibmittelhaltige Polystyolschmelze (6 Gew.-% n-Pentan) wurde mit 100 kg/h Durchsatz durch eine Düsenplatte mit 300 Bohrungen (Durchmesser am Düsenaustritt (D) 0,4 mm, mit konischem Einlaufwinkel entsprechend Form B in Fig. 1) gefördert. Die Schmelzetemperatur betrug 180°C.

| Einlaufwinkel (α) | Granulatdurchmesser (mm) |
|---|---|
| 180° | 0,8 |
| 90° | 0,7 |
| 45° | 0,65 |
| 30° | 0,60 |

### Beispiel 4:

Die treibmittelhaltige Polystyolschmelze (6 Gew.-% n-Pentan) wurde mit 100 kg/h Durchsatz durch eine Düsenplatte mit 150 Bohrungen (Durchmesser am Düsenaustritt (D) 0,6 mm) gefördert. Die Schmelzetemperatur betrug 180°C.

| Düsenform nach Fig. 1 | Granulatdurchmesser (mm) |
|---|---|
| B | 1,1 |
| C | 0,72 |

### Beispiel 5:

Die treibmittelhaltige Polystyolschmelze (6 Gew.-% n-Pentan) wurde mit 100 kg/h Durchsatz durch eine Düsenplatte mit 150 Bohrungen (Durchmesser am Düsenaustritt (D) 0,6 mm, entsprechend Form A) gefördert. Die Schmelzetemperatur betrug 180°C.

| Zusatz | Granulatdurchmesser (mm) |
|---|---|
| ohne | 1,1 |
| 3 Gew.-% Mineralöl | 0,8 |
| 5 Gew.-% Butylbenzylphthalat | 0,8 |
| 5 Gew.-% niedermolekulares GPPS (M_{W} = 5000) | 0,75 |

### Beispiel 6:

Es wurden Polysytyrole mit den Eigenschaften aus Beispiel 1 aber unterschiedlichen Uneinheitlichkeiten Mw/Mn eingesetzt. Die treibmittelhaltige Polystyolschmelze (6 Gew.-% n-Pentan) wurde mit 100 kg/h Durchsatz durch eine Düsenplatte mit 300 Bohrungen (Durchmesser am Düsenaustritt (D) 0,4 mm, entsprechend Form A in Fig. 1) gefördert. Die Schmelzetemperatur betrug 180°C.

| Mw/Mn | Granulatdurchmesser (mm) |
|---|---|
| 3 | 0,8 |
| 2 | 0,6 |
| 1,5 | 0,5 |

### Beispiel 7:

Zu einer Polystyrolschmelze (PS 158 K) wurden 0,1 Gew.-% Wasser und 6 Gew.-% n-Pentan zugegeben und mit 100 kg/h Durchsatz durch eine Düsenplatte mit 300 Bohrungen (Durchmesser am Düsenaustritt (D) 0,4 mm, entsprechend Form A in Fig. 1) gefördert. Die Schmelzetemperatur betrug 160°C. Die erhaltenen expandierbaren Polystyrolgranulate besaßen einen einheitlichen Granulatdurchmesser von 1,0 mm. Die erhaltenen Granulate wurden mit strömendem Wasserdampf zu Schaumpartikeln mit feinzelliger Schaumstruktur expandiert, die unter einem Mikroskop ausgewertet wurde. Die Zellzahl betrug ca 4 bis 4,5 Zellen/mm. Über 90% der Innenwassertröpfchen wies einen Durchmesser von 1,5 µm auf.

### Beispiel 8:

Beispiel 7 wurde wiederholt mit dem Unterschied, dass der Polymerschmelze 0,6 Gew.% Wasser zugesetzt wurden. Die erhaltenen expandierbaren Polystyrolgranulate besaßen einen einheitlichen Granulatdurchmesser von 1,0 mm. Die erhaltenen Granulate wurden mit strömendem Wasserdampf zu Schaumpartikeln mit feinzelliger Schaumstruktur expandiert, die unter einem Mikroskop ausgewertet wurde. Die Zellzahl betrug ca. 8 bis 8,5 Zellen/mm. Über 90% der Innenwassertröpfchen wies einen Durchmesser von 10,5 µm auf.

### Beispiel 9:

Zu einer Polystyrolschmelze (PS 158 K) wurden 6 Gew.-% n-Pentan, 0,3 Ge.-% eines Polysytrol/Maleinsäureanhydrid-Pfropfcopolymer als Dispergierhilfsmittel und 0,8 Gew.-% Silbermetallpigment, jeweils bezogen auf die Polymerschmelze, zugegeben und mit 100 kg/h Durchsatz durch eine Düsenplatte mit 300 Bohrungen (Durchmesser am Düsenaustritt (D) 0,4 mm, entsprechend Form A in Fig. 1) gefördert. Die Schmelzetemperatur betrug 160°C. Die erhaltenen expandierbaren Polystyrolgranulate besaßen einen einheitlichen Granulatdurchmesser von 1,0 mm und wurden mit strömendem Wasserdampf zu Schaumpartikeln mit homogener Schaumstruktur expandiert.

### Beispiel 10:

Beispiel 9 wurde wiederholt mit dem Unterschied, dass 0,8 Gew.-% eines goldmetalligen Farbpigmentes und 0,3 Gew.-% Organosilan als Dispergierhilfsmittel zugesetzt wurden. Die erhaltenen expandierbaren Polystyrolgranulate besaßen einen einheitlichen Granulatdurchmesser von 1,0 mm und wurden mit strömendem Wasserdampf zu Schaumpartikeln mit homogener Schaumstruktur expandiert.

### Beispiel 11:

Eine treibmittelhaltige Polymerschmelze (Polystyrol mit einer Viskositätszahl VZ von 74 ml/g, mittlerem Molekulargewicht M_{w} von 190.000 g/mol und einer Uneinheitlichkeit M_{w}/Mₙ von 3,0 und 6 Gew.-% n-Pentan) wurde mit einem Durchsatz von 300 kg/h über ein Anfahrventil mit ölbeheizter, einstellbarer Drosselvorrichtung (Anfahrschmelzedruck ca. 180 bar) durch eine Düsenplatte mit 300 Bohrungen mit 0,6 mm Durchmesser am Düsenaustritt gefördert. Die erhaltenen expandierbaren Polystyrolgranulate zeigten eine enge Partikelgrößenverteilung , wobei 80% der Partikel einen Druchmesser im Bereich von 0,62 bis 0,8 mm aufwiesen. Der Restmonomerengehalt wurde zu 325 ppm bestimmt.

## Patentansprüche

1. Verfahren zur Herstellung von expandierbaren Styrolpolymeren mit einem Molekulargewicht M_{w} von mehr als 170.000 g/mol, **dadurch gekennzeichnet, dass** man eine treibmittelhaltige Styrolpolymerschmelze mit einer Temperatur im Bereich von 140 bis 300°C durch eine Düsenplatte mit Bohrungen, deren Durchmesser am Düsenaustritt höchstens 1,5 mm betragen, fördert und anschließend granuliert.

2. Verfahren nach Anspruch 1, **dadurch gekennzeichnet, dass** das expandierbare Styrolpolymer ein Molekulargewicht im Bereich von 190.000 bis 400.000 g/mol aufweist.

3. Verfahren nach Anspruch 1 oder 2, **dadurch gekennzeichnet, dass** das expandierbare Styrolpolymer eine Molekulargewichts-verteilung mit einer Uneinheitlichkeit Mw/Mn von höchstens 3.5 aufweist.

4. Verfahren nach einem der Ansprüche 1 bis 3, **dadurch gekennzeichnet, dass** man als Styrolpolymer glasklares Polystyrol (GPPS), Schlagzähpolystyrol (HIPS), Acryinitril-Butadien-Styrolpolymerisate (ABS), Styrol-Acrylnitril (SAN) oder Mischungen davon oder mit Polyphenylenether (PPE) einsetzt.

5. Verfahren nach einem der Ansprüche 1 bis 4. **dadurch gekennzeichnet, dass** die treibmittelhaltige Styrolpolymerschmelze in homogener Verteilung 2 bis 10 Gew.-% eines oder mehrerer Treibmittel, ausgewählt aus der Gruppe der aliphatischen Kohlenwasserstoffe mit 2 bis 7 Kohlenstoffatomen, Alkoholen, Ketone, Ether oder halogenierten Kohlenwasserstoffe, enthält.

6. Verfahren nach einem der Ansprüche 1 bis 5, **dadurch gekennzeichnet, dass** die treibmittelhaltige Styrolpolymerschmelze Weichmacher, wie Mineralöle, oligomere styrolpolymere, Phtalate in Anteilen im Bereich von 0,05 bis 10 Gew.-%, bezogen auf das Styrolpolymerisat enthalten.

7. Verfahren nach einem der Ansprüche 1 bis 6, **dadurch gekennzeichnet, dass** man die treibmittelhaltige Styrolpolymerschmelze mit einer Temperatur im Bereich von 160 bis 240°C durch die Düsenplatte fördert.

8. Verfahren nach einem der Ansprüche 1 bis 7, **dadurch gekennzeichnet, dass** man die Düsenplatte mindestens auf die Temparatur der treibmittelhaltigen Polystyrolschmelze beheizt.

9. Verfahren nach einem der Ansprüche 1 bis 8, **dadurch gekennzeichnet, dass** der Durchmesser (D) der Düsenbohrungen am Düsenaustritt im Bereich von 0,2 bis 1,2 mm liegt.

10. Verfahren nach einem der Ansprüche 1 bis 9, **dadurch gekennzeichnet, dass** die Düsenplatte Bohrungen mit einem Verhältnis L/D (Länge (L) des Düsenbereichs, dessen Durchmesser höchstens dem Durchmesser am Düsenaustritt entspricht, zum Durchmesser (D) am Düsenaustritt) von mindestens 2 aufweist.

11. Verfahren nach einem der Ansprüche 1 bis 10, **dadurch gekennzeichnet, dass** der Durchmesser (E) der Bohrungen am Düseneintritt der Düsenplatte mindestens doppelt so groß wie der Durchmesser (D) am Düsenaustritt ist.

12. Verfahren nach einem der Ansprüche 1 bis 11, **dadurch gekennzeichnet, dass** die Düsenplatte Bohrungen mit konischem Einlauf mit einem Einlaufwinkel α kleiner 180° aufweist.

13. Verfahren nach einem der Ansprüche 1 bis 12, **dadurch gekennzeichnet, dass** die Düsenplatte Bohrungen mit konischem Auslauf mit einem Auslaufwinkel β kleiner 90° aufweist.

14. Verfahren nach einem der Ansprüche 1 bis 13, **dadurch gekennzeichnet, dass** die Düsemplatte Bohrungen mit mit unterschiedlichen Austrittsdurchmessern (D) aufweist.

15. Verfahren nach einem der Ansprüche 1 bis 14, **dadurch gekennzeichnet, dass** die treibmittelhaltige Styrolpolymerschmelze 0,05 bis 1,5 Gew-% Wasser, bezogen auf das Styrolpolymere, enthält.

16. Verfahren zur Herstellung von eatpandierbaren Styrolpolymeren mit einem Molekulargewicht Mw von mehr als. 170.000 g/mol, umfassend die Schritte
a) Polymerisation von Styrolmonomer und gegebenenfalls copolymersierbaren Monomeren,
b) Entgasungung des erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C,
d) Kühlen der treibmittelhaltigen Styrolpolymerschmelze auf eine Temperatur von mindestens 120°C
e) Austrag durch eine Düsenplatte mit Bohrungen, deren Durchmesser am Düsenaustritt höchstens 1.5 mm beträgt und
f) Granulieren der treilmittelhaltigen Schmelze.

17. Verfahren nach Anspruch 15, **dadurch gekennzeichnet, dass** Schritt f) direkt hinter der Düsenplatte unter Wasser bei einem Druck im Bereich von 1 bis 10 bar erfolgt.

18. Expandierbare Styrolpolymere (EPS) erhältlich nach dem Verfahren gemäß Anspruch 16, **dadurch gekennzeichnet, dass** sie höchstens 500 ppm an Styrolmonomeren enthalten.

19. Expandierbare Styrolpolymere (EPS) mit einem Molekulargewicht M_{w} von mehr ale 170.000 g/mol, **dadurch gekennzeichnet, dass** sie 0,05 bis 1,5 Gew-% Innenwasser enthalten.

20. Expandierbare Styrolpolymere (EPS) nach Anspruch 19, **dadurch gekennzeichnet, dass** mindestens 90% des Innenwassers in Form von Innenwassertröpfchen mit einem Durchmesser im Bereich von 0,5 bis 15 µm vorliegen.

21. Expandierbare Styrolpolymere (EPS) nach Anspruch 19 oder 20, **dadurch gekennzeichnet, dass** das Expansionsvermögen α höchstens 125 beträgt.

22. Expandierbare Styrolpolymere (EPS) nach einem der Ansprüche 18 bis 21, **dadurch gekennzeichnet, dass** sie in Form von Granulaten mit einem Durchmesser von 0,4 bis 1,8 mm vorliegen.

23. Expandierbare Styrolpolymergranulate (EPS) nach Anspruch 22, **dadurch gekennzeichnet, dass** sie eine Schüttdichte von höchstens 700 g/l aufweisen.

24. Expandierbare styrolpolymere (EPS) nach einem der Ansprüche 18 bis 22, **dadurch gekennzeichnet, dass** sie 0,01 bis 30 Gew.-% Pigmente enthalten.

## Claims

1. A process for the preparation of expandable styrene polymers having a molecular weight M_{w} of greater than 170,000 g/mol, which comprises conveying a blowing agent-containing styrene polymer melt having a temperature in the range from 140 to 300°C through a die plate with holes whose diameter at the die exit is at most 1.5 mm, and subsequently granulating the extrudate.

2. The process according to claim 1, wherein the expandable styrene polymer has a molecular weight in the range from 190,000 to 400,000 g/mol.

3. The process according to claim 1 or 2, wherein the expandable styrene polymer has a molecular weight distribution having a polydispersity Mw/Mn of at most 3.5.

4. The process according to any one of claims 1 to 3, wherein the styrene polymer employed is transparent polystyrene (GPPS), high-impact polystyrene (HIPS), an acrylonitrile-butadiene-styrene polymer (ABS), styrene-acrylonitrile (SAN) or a mixture thereof or with polyphenylene ether (PPE).

5. The process according to any one of claims 1 to 4, wherein the blowing agent-containing styrene polymer melt comprises, in homogeneous distribution, from 2 to 10% by weight of one or more blowing agents selected from the group consisting of aliphatic hydrocarbons having from 2 to 7 carbon atoms, alcohols, ketones, ethers or halogenated hydrocarbons.

6. The process according to any one of claims 1 to 5, wherein the blowing agent-containing styrene polymer melt comprises plasticizers, such as mineral oils, oligomeric styrene polymers and phthalates, in proportions in the range from 0.05 to 10% by weight, based on the styrene polymer.

7. The process according to one or more of claims 1 to 6, wherein the blowing agent-containing styrene polymer melt is conveyed through the die plate at a temperature in the range from 160 to 240°C.

8. The process according to any one of claims 1 to 7, wherein the die plate is heated at least to the temperature of the blowing agent-containing polystyrene melt.

9. The process according to any one of claims 1 to 8, wherein the diameter (D) of the die holes at the die exit is in the range from 0.2 to 1.2 mm.

10. The process according to any one of claims 1 to 9, wherein the die plate has holes having an L/D ratio (length (L) of the die zone, whose diameter corresponds at most to the diameter at the die exit, to the diameter (D) at the die exit) of at least 2.

11. The process according to any one of claims 1 to 10, wherein the diameter (E) of the holes at the die entrance of the die plate is at least twice as great as the diameter (D) at the die exit.

12. The process according to any one of claims 1 to 11, wherein the die plate has holes having a conical inlet with an inlet angle α of less than 180°.

13. The process according to any one of claims 1 to 12, wherein the die plate has holes having a conical outlet with an outlet angle β of less than 90°.

14. The process according to any one of claims 1 to 13, wherein the die plate has holes having different exit diameters (D).

15. The process according to any one of claims 1 to 14, wherein the blowing agent-containing styrene polymer melt comprises 0.05 to 1.5% by weight of water, based on the styrene polymer.

16. A process for the preparation of expandable styrene polymers having a molecular weight Mw of greater than 170,000 g/mol, comprising the following steps:
a) polymerization of styrene monomer and, if appropriate, copolymerizable monomers,
b) degassing of the resultant styrene polymer melt,
c) mixing of the blowing agent and, if appropriate, additives into the styrene polymer melt by means of static or dynamic mixers at a temperature of at least 150°C,
d) cooling of the blowing agent-containing styrene polymer melt to a temperature of at least 120°C,
e) discharge through a die plate having holes whose diameter at the die exit is at most 1.5 mm, and
f) granulation of the blowing agent-containing melt.

17. The process according to claim 15, wherein step f) is carried out directly behind the die plate under water at a pressure in the range from 1 to 10 bar.

18. An expandable styrene polymer (EPS) obtainable by the process according to claim 16, which comprises at most 500 ppm of styrene monomers.

19. An expandable styrene polymer (EPS) having a molecular weight M_{w} of more than 170,000 g/mol, which comprises from 0.05 to 1.5% by weight of internal water.

20. The expandable styrene polymer (EPS) according to claim 19, wherein at least 90% of the internal water is present in the form of internal water droplets having a diameter in the range from 0.5 to 15 µm.

21. The expandable styrene polymer (EPS) according to claim 19 or 20, whose expansion capability α is at most 125.

22. The expandable styrene polymer (EPS) according to any of claims 18 to 21, which takes the form of granules having a diameter of from 0.4 to 1.8 mm.

23. The expandable granulated styrene polymer (EPS) according to claim 22, which has a bulk density of at most 700 g/l.

24. The expandable styrene polymer (EPS) according to any of claims 18 to 22, which comprises from 0.01 to 30% by weight of pigments.

## Revendications

1. Procédé de préparation de polymères de styrène expansibles présentant un poids moléculaire M_{w} de plus de 170 000 g/mole, **caractérisé en ce qu'**on transporte une masse fondue de polymère de styrène contenant un agent gonflant à une température de l'ordre de 140 à 300°C au travers d'une plaque de filière munie de trous dont les diamètres sont à la sortie de filière d'au maximum 1, 5 mm et **en ce qu'**on effectue ensuite une granulation.

2. Procédé suivant la revendication 1, **caractérisé en ce que** le polymère de styrène expansible présente un poids moléculaire de l'ordre de 190 000 à 400 000 g/mole.

3. Procédé suivant la revendication 1 ou 2, **caractérisé en ce que** le polymère de styrène expansible présente une répartition de poids moléculaire présentant une hétérogénéité Mw/Mn d'au maximum 3,5.

4. Procédé suivant l'une des revendications 1 à 3, **caractérisé en ce que**, comme polymère de styrène, on met en oeuvre du polystyrène clair comme du verre (GPPS), du polystyrène résistant aux chocs (HIPS), des polymères d'acrylonitrile-butadiène-styrène (ABS), du styrène-acrylonitrile (SAN) ou des mélanges de ces substances ou avec de l'éther de polyphénylène (PPE).

5. Procédé suivant l'une des revendications 1 à 4, **caractérisé en ce que** la masse fondue de polymère de styrène contenant de l'agent gonflant contient en une distribution homogène 2 à 10 % en poids d'un ou de plusieurs agents gonflants choisis parmi le groupe des hydrocarbures aliphatiques comportant 2 à 7 atomes de carbone, des alcools, des cétones, des éthers ou des hydrocarbures halogénés.

6. Procédé suivant l'une des revendications 1 à 5, **caractérisé en ce** la masse fondue de polymère de styrène contenant de l'agent gonflant contient des agents plastifiants, tels que des huiles minérales, des polymères de styrène oligomères, des phtalates en des proportions de l'ordre de 0,05 à 10 % en poids, par rapport au polymère de styrène.

7. Procédé suivant l'une des revendications 1 à 6, **caractérisé en ce qu'**on transporte la masse fondue de polymère de styrène contenant de l'agent gonflant au travers de la plaque de filière à une température de l'ordre de 160 à 240°C.

8. Procédé suivant l'une des revendications 1 à 7, **caractérisé en ce qu'**on chauffe la plaque de filière au moins à la température de la masse fondue de polystyrène contenant de l'agent gonflant.

9. Procédé suivant l'une des revendications 1 à 8, **caractérisé en ce que** le diamètre (D) des trous à la sortie de filière est de l'ordre de 0,2 à 1,2 mm.

10. Procédé suivant l'une des revendications 1 à 9, **caractérisé en ce que** la plaque de filière présente des trous ayant un rapport L/D (Longueur (L) de la zone de filière dont le diamètre correspond au maximum au diamètre à la sortie de filière, par rapport au diamètre (D) à la sortie de filière) d'au moins 2.

11. Procédé suivant l'une des revendications 1 à 10, **caractérisé en ce que** le diamètre (E) des trous à l'entrée de la plaque de filière est au moins deux fois aussi grand que le diamètre (D) à la sortie de filière.

12. Procédé suivant l'une des revendications 1 à 11, **caractérisé en ce que** la plaque de filière présente des trous à entrée conique ayant un angle d'entrée α inférieur à 180°.

13. Procédé suivant l'une des revendications 1 à 12, **caractérisé en ce que** la plaque de filière présente des trous ayant une sortie conique avec un angle de sortie β inférieur à 90°.

14. Procédé suivant l'une des revendications 1 à 13, **caractérisé en ce que** la plaque de filière présente des trous ayant des diamètres de sortie (D) différents.

15. Procédé suivant l'une des revendications 1 à 14, **caractérisé en ce que** la masse fondue de polymère de styrène contenant de l'agent gonflant contient 0,05 à 1,5 % en poids d'eau, par rapport au polymère de styrène.

16. Procédé de préparation de polymères de styrène expansibles présentant un poids moléculaire Mw supérieur à 170 000 g/mole, comprenant les étapes
a) de polymérisation de monomère de styrène et éventuellement de monomères copolymérisables,
b) de dégazage de la masse fondue de polymère de styrène obtenue,
c) d'incorporation de l'agent gonflant et éventuellement d'additifs dans la masse fondue de polymère de styrène au moyen d'un mélangeur statique ou dynamique, à une température d'au moins 150°C,
d) de refroidissement de la masse fondue de polymère de styrène contenant de l'agent gonflant à une température d'au moins 120°C,
e) de décharge au travers d'une plaque de filière présentant des trous dont le diamètre est d'au maximum de 1,5 mm à la sortie de filière, et
f) de granulation de la masse fondue contenant de l'agent gonflant.

17. Procédé suivant la revendication 15, **caractérisé en ce que** l'étape f) a lieu directement derrière la plaque de filière, sous eau, à une pression de l'ordre de 1 à 10 bars.

18. Polymères de styrène expansibles (EPS) que l'on peut obtenir suivant le procédé selon la revendication 16, **caractérisés en ce qu'**ils contiennent au maximum 500 ppm de monomères de styrène.

19. Polymères de styrène expansibles (EPS) présentant un poids moléculaire M_{w} supérieur à 170 000 g/mole, **caractérisés en ce qu'**ils contiennent 0,05 à 1,5 % en poids d'eau interne.

20. Polymères de styrène expansibles (EPS) suivant la revendication 19, **caractérisés en ce qu'**au moins 90 % de l'eau interne se présentent sous la forme de gouttelettes d'eau interne ayant un diamètre de l'ordre de 0,5 à 15 µm.

21. Polymères de styrène expansibles (EPS) suivant la revendication 19 ou 20, **caractérisés en ce que** la capacité d'expansion α est au maximum de 125.

22. Polymères de styrène expansibles (EPS) suivant l'une des revendications 18 à 21, **caractérisés en ce qu'**ils se présentent sous la forme de granules ayant un diamètre de 0,4 à 1,8 mm.

23. Granules de polymère de styrène expansibles (EPS) suivant la revendication 22, **caractérisés en ce qu'**ils présentent une masse volumique apparente d'au maximum 700 g/l.

24. Polymères de styrène expansibles (EPS) suivant l'une des revendications 18 à 22, **caractérisés en ce qu'**ils contiennent 0,01 à 30 % en poids de pigments.
